# EUROPÄISCHE PATENTSCHRIFT

(11) **EP 2 574 231 B1**
(45) Veröffentlichungstag und Bekanntmachung des Hinweises auf die Patenterteilung: **28.12.2016**
(21) Anmeldenummer: 12175226.5
(22) Anmeldetag: 06.07.2012
(51) Int. Cl.: A01F 7/06

(54) **Mähdrescher**
Combine harvester
Moissonneuse-batteuse

(30) Priorität: 30.09.2011 DE 102011054098
(43) Veröffentlichungstag der Anmeldung: 03.04.2013
(73) Patentinhaber: CLAAS Selbstfahrende Erntemaschinen GmbH, 33428 Harsewinkel (DE)
(72) Erfinder: Bußmann, Jens, 49179 Ostercappeln (DE); Drewes, Rainer, 59320 Ennigerloh (DE); Holtmann, Bernd, 48324 Sendenhorst (DE); Schwersmann, Berthold, 49186 Bad Iburg (DE)

(56) Entgegenhaltungen:
- EP-A1- 0 432 632
- US-A- 6 129 629

## Beschreibung

Die vorliegende Erfindung betrifft einen Mähdrescher gemäß dem Oberbegriff des Anspruches 1.

Mähdrescher mit einer von einem Rahmen getragenen Karosserie, welche in ihrem Inneren ein nach dem Axialflussprinzip arbeitendes, vormontiertes Abscheideaggregat aufnehmen, sind hinreichend bekannt. Derartige Abscheideaggregate erfordern bei ihrer Einbringung in die Karosserie eines Mähdreschers eine besondere Sorgfalt hinsichtlich der Ausrichtung gegenüber dem Abscheideaggregat vorgeschalteten Arbeitsorganen, um einen sicheren Gutfluss zu gewährleisten. Ein weiteres Anliegen besteht darin, das Abscheideaggregat in einfacher Weise austauschen beziehungsweise warten zu können.

Die EP 0 432 632 B1 beschreibt einen selbstfahrenden Mähdrescher der eingangs genannten Art. Der Mähdrescher umfasst eine Wendetrommel sowie ein der Wendetrommel nachgeordnetes, nach dem Axialflussprinzip arbeitendes Abscheideaggregat, welche durch den Einsatz von Führungsmitteln durch eine Öffnung im rückwärtigen Bereich der Karosserie aus dieser hinaus bewegbar ist. Die Führungsmittel sind als Rahmenteile ausgeführt, die sich beidseitig des Abscheideaggregates in Längsrichtung erstrecken, und die stirnseitig jeweils durch eine mit den Rahmenteilen verschweißte Front- und Endplatte begrenzt sind. Das Abscheideaggregat ist in seinem mittleren Bereich durch Platten mit den Rahmenteilen verschweißt. Das mit den Rahmenteilen verschweißte Abscheideaggregat ist über sich seitlich erstreckende, an der Karosserie angeordnete Führungsschienen relativ zu dieser in Längsrichtung beweglich.

Als nachteilig an dem Mähdrescher gemäß der EP 0 432 632 B1 zeigt sich, dass Fertigungstoleranzen des vormontierten Abscheideaggregates wie auch der Rahmenteile, mit denen das Abscheideaggregat verschweißt wird, bei der Montage unberücksichtigt bleiben. Bereits die Verbindung des Abscheideaggregates mit dem Rahmenteil setzt eine hohe Fertigungsgenauigkeit beider Bauteile voraus. Das durch die Führungsschienen geführte Einsetzen beider Bauteile in die Karosserie bietet einen nur geringen Spielraum, diese Toleranzen auszugleichen. Insbesondere was die Positionierung gegenüber der Wendetrommel im Einlaufbereich einerseits und bezüglich einer Antriebsvorrichtung des Abscheideaggregates im Auswurfbereich angeht.

Somit ist es die Aufgabe der Erfindung, einen Mähdrescher der eingangs genannten Art bereitzustellen, der einerseits einen einfachen Austausch des Abscheideaggregates ermöglicht und andererseits eine Kompensation von bei der Einbringung in die Karosserie auftretenden Fertigungstoleranzen ermöglicht.

Dies wird erfindungsgemäß durch die kennzeichnenden Merkmale des Anspruches 1 erreicht.

Vorteilhafte Weiterbildungen sind Gegenstand der Unteransprüche.

Gemäß Anspruch 1 wird vorgeschlagen, dass das Abscheideaggregat in seinem Einlaufbereich durch eine Festlagerung und in seinem Auswurfbereich durch eine Loslagerung an dem Rahmen vormontierbar ist. Das vormontierte Abscheideaggregat ist über den rückwärtigen Bereich des Mähdreschers in dessen Karosserie einführbar und wird zur Fixierung der Position gegenüber der Wendetrommel im Einlaufbereich mit dem Rahmen verschraubt. Im Auswurfbereich ist das Abscheideaggregat durch ein Loslager gegenüber dem Rahmen positionierbar, so dass das Abscheideaggregat im Auswurfbereich nach der Befestigung im Einlaufbereich in Längs- und Querrichtung relativbeweglich zu dem Rahmen gehalten ist. Insbesondere ermöglicht die Loslagerung des Abscheideaggregates im Auswurfbereich einen Ausgleich von fertigungstechnisch bedingten Längentoleranzen. Wesentlich ist, dass die Fixierung des Abscheideaggregates lediglich an den jeweiligen äußeren Endbereichen erfolgt, um einen größtmöglichen Spielraum für den Ausgleich von Fertigungstoleranzen bei der Montage des Abscheideaggregates zu erreichen.

Hierzu können an der Innenseite des Rahmens im Auswurfbereich des Abscheideaggregates zylindrische Aufnahmeelemente einander gegenüberliegend angeordnet sein, an denen das Abscheideaggregat aufhängbar ist. Das Abscheideaggregat ist an den Aufnahmeelementen flexibel aufgehängt, wobei diese im Wesentlichen die Gewichtslast bei der Montage des Abscheideaggregates tragen.

Vorzugsweise kann das Abscheideaggregat in seinem Auswurfbereich eine Halteeinrichtung aufweisen, welche mit einer den Auswurfbereich begrenzenden Rückwand lösbar verbindbar ist. Die Rückwand dient der präzisen Fixierung zumindest eines Abscheidemantels, der sich über die Länge des Abscheideaggregates erstreckt.

Hierbei kann die Halteeinrichtung mit den Aufnahmeelementen korrespondierende, sich abschnittsweise in axialer Richtung des Abscheideaggregates erstreckende Ausnehmungen aufweisen. Die Ausnehmungen und die Aufnahmeelemente bilden eine mögliche Variante einer Loslagerung.

Vorteilhafterweise kann die Halteeinrichtung als eine Schweißbaugruppe ausgeführt sein, die eine Querverstrebung umfasst, an der Aufnahmen für zumindest ein Getriebe und eine Antriebswelle, Positionierelemente zur Befestigung an der Rückwand des Rotorgehäuses sowie Seitenelemente angeordnet sind. Der Halteeinrichtung kommen somit mehrere Aufgaben zu, um die Montage des Abscheideaggregates am Mähdrescher einfacher und präziser zu gestalten. Hierzu kann die als Schweißbaugruppe ausgeführte Halteeinrichtung in einer Aufspannung bearbeitet werden. Die Halteeinrichtung ermöglicht eine genaue Positionierung des zumindest einen Getriebes gegenüber der Antriebswelle, über die ein Antriebsmoment auf das Abscheideaggregat übertragen wird.

Bevorzugt kann das Abscheideaggregat zumindest einen unterbrechungsfrei gestalteten, durchgehenden Abscheidemantel aufweisen. Ein unterbrechungsfreier Abscheidemantel hat den Vorteil, dass eine Gutflussverbesserung erreicht wird, weil eine Unterbrechung von Leitschienen, die auf der dem Rotor zugewandten Seite des Abscheidemantels angeordnet sind, durch die fehlende Segmentierung des Abscheidemantels nicht gegeben ist. Die Leitschienen weisen keine Unterbrechungen auf, wodurch der Gutfluss im Abscheideaggregat verbessert wird. Zudem wird durch die unterbrechungsfreie Gestaltung des zumindest einen Abscheidemantels eine Verbesserung der Fertigungstoleranzen erreicht. Zu diesem Zweck wird der zumindest eine Abscheidemantel aus einem Zuschnitt gefertigt.

Insbesondere kann beidseitig an dem Rahmen mindestens eine Langlochkulisse vorgesehen sein, in der mit der Halteeinrichtung verbindbare Schraubbolzen oder sonstige, gleichwirkende Verbindungsmittel verschiebbar geführt angeordnet sind. Auf diese Weise bleibt der Toleranzausgleich, der durch die Kombination von Festlager und Loslager bei der Vormontage des Abscheideaggregates erzielt wird, auch bei der anschließenden Fixierung bei der Endmontage des Abscheideaggregates im Mähdrescher erhalten.

Vorzugsweise können der Fixierung der Seitenelemente an dem Rahmen dienende Befestigungsbleche Langlöcher aufweisen, wodurch die Befestigungsbleche gegenüber Schrauben, die die jeweiligen Befestigungsbleche mit dem Rahmen ortsfest verbinden, relativ zu diesen verschiebbar geführt sind. Hierdurch lässt sich in einfacher Weise eine sichere Fixierung des Abscheideaggregates unter Beibehaltung des durch das Loslager erreichten Toleranzausgleiches. Die Seitenelemente, die sich vorzugsweise senkrecht zu der Querverstrebung erstrecken, sind so ausgeführt, dass an ihnen die lösbare Befestigung des zumindest einen Abscheidemantels möglich ist. Die Querverstrebung und die Seitenwände der in einer Aufspannung bearbeiteten Halteeinrichtung ermöglichen toleranzarme Fertigung, so dass auf einfache Weise eine fluchtende Anordnung der Antriebswelle und Getriebe möglich ist.

In vorteilhafter Weiterbildung kann der Einlaufbereich eine die Rotorgehäuseeingangsöffnung bereichsweise abdeckende Stirnwand aufweisen, an der auf ihrer der Unterseite des Rotorgehäuses zugewandten Seite zumindest eine Verschleißleiste angeordnet ist. Die Verschleißleiste besteht beispielsweise aus Edelstahl oder gehärtetem Stahl, um einen möglichst lang andauernden Verschleißschutz zu bieten.

Vorteilhafterweise kann die Verschleißleiste auswechselbar an der Stirnwand angeordnet sein.

Weiterhin kann an dem Rahmen des Mähdreschers ein Antrieb in einer Langlochkulisse geführt angeordnet sein. Der Antrieb ist über die Antriebswelle mit dem mindestens einen Getriebe verbunden. Der Antrieb ist in der Langlochkulisse verschieblich geführt, um flexibel an den erfindungsgemäß erreichbaren Toleranzausgleich des Abscheideaggregates anpassbar zu sein.

In bevorzugter Weiterbildung kann das Abscheidaggregat in vormontiertem Zustand in die Karosserie einschiebbar sein. Das vollständig vormontierte Abscheideaggregat lässt sich in einfacher Weise wie eine Patrone in die Karosserie einführen.

Die vorliegende Erfindung wird nachstehend anhand eines in den Zeichnungen dargestellten Ausführungsbeispieles näher erläutert.

Es zeigen:
- Fig. 1: eine schematische Seitenansicht eines Mähdreschers mit einem nach dem Axialflussprinzip arbeitenden Abscheideaggregat;
- Fig. 2: eine Seitenansicht des Abscheideaggregates gemäß Fig. 1;
- Fig. 3: eine Detailansicht des Abscheidaggregates schräg von hinten in teilmontierter Position;
- Fig. 4: eine Detailansicht des Abscheidaggregates schräg von hinten in vollständig montierter Position;
- Fig. 5: eine vergrößerte Detailansicht des rückwärtigen Bereiches des Abscheidaggregates von der Seite;
- Fig. 6: eine Detailansicht des Abscheideaggregates von schräg vorne.

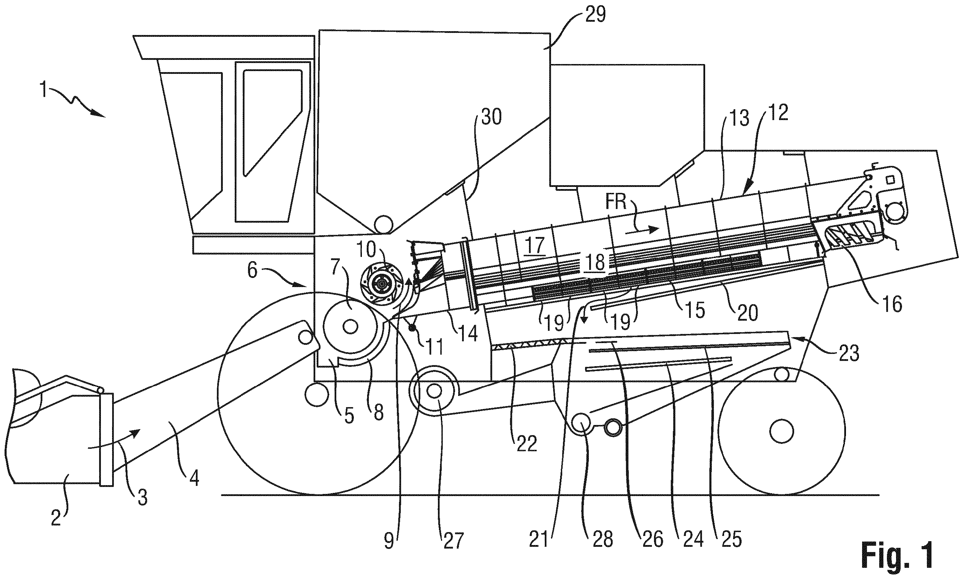

Die Darstellung in Fig. 1 zeigt einen Mähdrescher 1 bei dem das vom Schneidwerk 2 abgeschnittene Erntegut 3 über einen Schrägförderkanal 4 zu einer nach dem Tangentialprinzip arbeitenden Drescheinrichtung 6 gelangt. Diese besteht aus zumindest einer Dreschtrommel 7 und einem zugeordneten Dreschkorb 8. Am Umfangsbereich der Dreschtrommel 7 sind Schlagleisten oder Dreschstifte angeordnet. Im Verlauf des Förderweges des Erntegutes 3 ist vor dem Dreschkorb 8 eine Steinfangmulde 5 angeordnet. Das Ausdreschen der im Erntegut 3 befindlichen Körner 15 erfolgt zwischen der entgegen dem Uhrzeigersinn rotierenden Dreschtrommel 7 und dem Dreschkorb 8. Der gesamte, die Drescheinrichtung 6 in tangentialer Richtung verlassende Nutzmaterialstrom 9 wird in ein Abscheideaggregat 12 gefördert. Der Fördervorgang wird durch eine parallel zur Dreschtrommel 7 angeordnete, rotierende Wendetrommel 10 unterstützt. Das Abscheideaggregat 12 ist in Fahrtrichtung des Mähdreschers 1 angeordnet und besteht im Wesentlichen aus einem feststehenden, in Förderrichtung FR ansteigenden zylindrischen Gehäuse 13, in dem ein drehbar angetriebener Rotor gelagert ist. Entsprechend der jeweiligen Leistungsklasse des Mähdreschers 1 können ein oder mehrere Abscheideaggregate 12 nebeneinander angeordnet werden. An der Innenseite des Gehäuses 13 und am Rotor sind in an sich bekannter Weise verschiedenartige Leit- und Förderelemente zur Bearbeitung des Nutzmaterialstromes 9 angebracht. Das Abscheideaggregat 12 umfasst einen Einlaufbereich 14, in dem das Abscheideaggregat 12 durch ein Festlager 11 im vorliegenden Ausführungsbeispiel am Trommelhaus 30 des Mähdreschers 1 befestigt ist, einen Abscheidebereich 15 und einen Auswurfbereich 16. Das Trommelhaus 30 ist als Laserbauteil ausgeführt, um die für die Positionierung und Fixierung im Mähdrescher 1 beziehungsweise gegenüber der Zuführtrommel 10 notwendigen Toleranzen einzuhalten. Die exakte Positionierung des Einlaufbereiches 14 des Abscheideaggregates 12 gegenüber der Zuführtrommel 10 ist zwingend, um einen störungsfreien Gutübergang beziehungsweise eine ungestörte Gutübergabe zu erreichen. Die Fixierung des Abscheideaggregates 12 kann auch an anderer Stelle innerhalb des Mähdreschers 1 erfolgen.

Der Einlaufbereich 14, der der Zufuhr und Weiterförderung des Nutzmaterialstromes 9 in den Abscheidebereich 15 dient, befindet sich in dem Trommelhaus 30. In dem sich daran anschließenden Abscheidebereich 15 besteht das Gehäuse 13 aus einem geschlossenen Abscheidemantel 17 und aus einem unteren Bodenbereich 18, der durchgängig mit Abscheidekörben 19 versehen ist. An diesen Abscheidekörben 19 werden die im Nutzmaterialstrom 9 enthaltenen Körner sowie Anteile von Kurzstroh und Spreu als weiterer Nutzmaterialstrom 21 abgeschieden. Alle übrigen Erntegutbestandteile werden in Richtung zum Auswurfbereich 16 gefördert und von dort aus dem Mähdrescher 1 herausgefördert. Der durch die Öffnungen der Abscheidekörbe 19 hindurchtretende, aus Körnern und anderen Erntegutteilen bestehende Nutzmaterialstrom 21 fällt auf einen unterhalb des Abscheidebereiches 14 angeordneten Rücklaufboden 20, der diesen zu einem stufenförmigen Vorbereitungsboden 22 fördert. Die Weiterförderung erfolgt durch eine Schwingbewegung des Vorbereitungsbodens 22 über eine Fallstufe 26 zu einer Reinigungseinrichtung 23, die aus zwei mit Abstand übereinander angeordneten und in Fahrtrichtung schwingenden Sieben 24, 25 und aus einem, einen Luftstrom erzeugenden Gebläse 27 besteht. In der Reinigungseinrichtung 23 werden die Körner von den noch vorhandenen leichten Beimengungen getrennt. Während die gereinigten Körner über eine Förderschnecke 28 und einen Elevator in den Korntank 29 gelangen, werden die leichten Stroh- und Spreuteile durch den Druckluftstrom des Gebläses 27 auf das Feld gefördert.

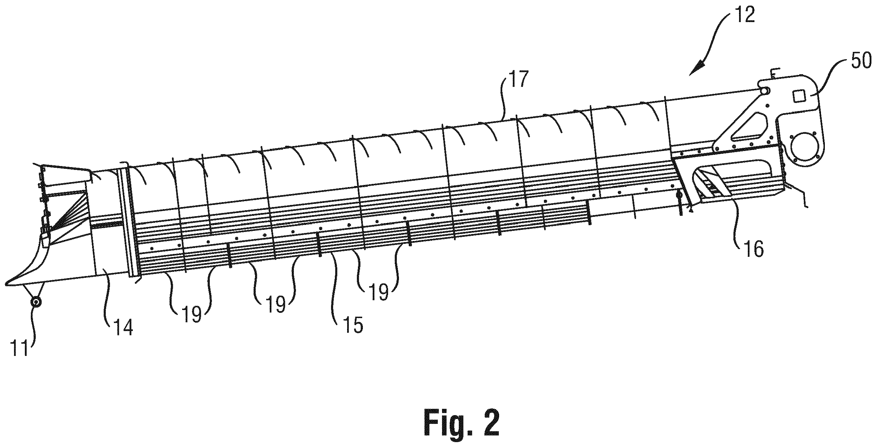

Die Darstellung in Fig. 2 zeigt nur das Abscheideaggregat 12 gemäß Fig. 1 in einer Seitenansicht. Wie aus der Darstellung ersichtlich ist, ist der Abscheidemantel 17 einteilig als durchgehendes Bauteil aus einem Zuschnitt bestehend ausgeführt. Die Fertigung des Abscheidemantels 17 aus einem Zuschnitt trägt zu einer Toleranzverbesserung bei. Der Abscheidemantel 17 weist insbesondere in axialer Richtung keine Unterbrechungen der auf seiner dem Rotor zugewandten Leitschienen wie auch seiner Oberfläche auf. Durch die einteilige Ausführung des Abscheidemantels 17 sowie die unterbrechungsfreie Gestaltung der Leitschienen wird eine Gutflussverbesserung erreicht. Im Auswurfbereich 16 ist eine Halteeinrichtung 30 angeordnet, die der Vereinfachung der Montage und der anschließenden Befestigung des Abscheideaggregates 12 am Mähdrescher 1 dient.

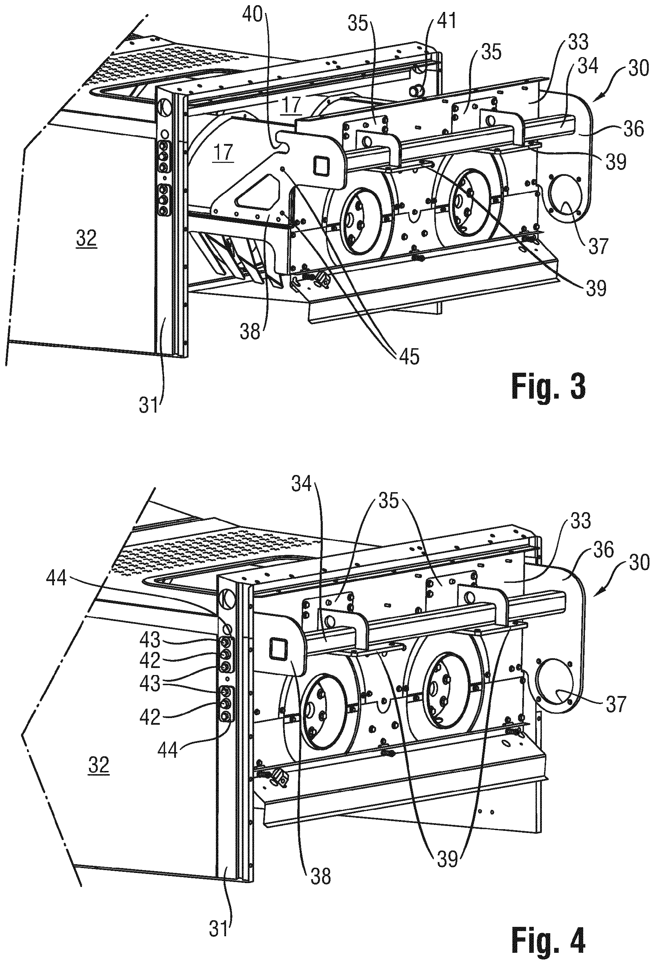

In Fig. 3 ist ein Ausschnitt des rückwärtigen Bereiches des Abscheideaggregates 12 in vormontierter Position dargestellt. Das Abscheideaggregat 12 ist für die Montage durch ein an einem Rahmen 31 angeordnetes, das Abscheideaggregat 12 in seinem Auswurfbereich 16 abschnittsweise umgebendes Auswurfgehäuse 32 einführbar. Die Halteeinrichtung 30 ist über eine Rückwand 33, die mit dem Auswurfgehäuse 32 abschließt, mit dem Abscheideaggregat 12 verbunden. Die Rückwand 33 dient der Fixierung der Abscheidemäntel 12. Um eine möglichst hohe Passgenauigkeit zu erreichen, ist die Rückwand 33 als Laserbauteil ohne Schweißungen ausgeführt. Die Halteeinrichtung 30 weist eine Querverstrebung 34 auf, an deren äußeren Enden einander gegenüberliegend eine erste Seitenwand 36 und eine zweite Seitenwand 38 angebracht sind, die sich abschnittsweise in Längsrichtung des Mähdreschers 1 erstrecken. Die erste Seitenwand 36 weist eine kreisförmige Durchtrittsöffnung 37 unterhalb der Querverstrebung 34 auf. Weiterhin sind an der Querverstrebung 34 der Anzahl der Rotoren des Abscheideaggregates 12 entsprechend Befestigungselemente 35 angeordnet, die sich parallel zu der Rückwand 33 erstrecken und mit dieser lösbar verbindbar sind. Unter einem Winkel zu dem jeweiligen Befestigungselement 35 geneigt sind an der Querverstrebung 34 der Anzahl der Rotoren des Abscheideaggregates 12 entsprechend Aufnahmeelemente 39 angeordnet, die für die Aufnahme von Getrieben vorgesehen sind, die dem Antrieb der Rotoren des Abscheideaggregates 12 dienen. Die kreisförmige Durchtrittsöffnung 37 in der ersten Seitenwand 36 dient der Durchführung und Lagerung einer Flanschwelle, an der eine Riemenscheibe angeordnet ist, um ein Antriebsmoment auf die Rotoren des Abscheideaggregates 12 zu übertragen. An den Seitenwänden 36, 38 sind die Abscheidemäntel 17 befestigbar. Weiterhin weisen die Seitenwände 36, 38 jeweils zwei senkrecht übereinander angeordnete Durchbohrungen 45 auf, die der Befestigung an dem Rahmen 31 dienen, wie weiter unten ausgeführt ist.

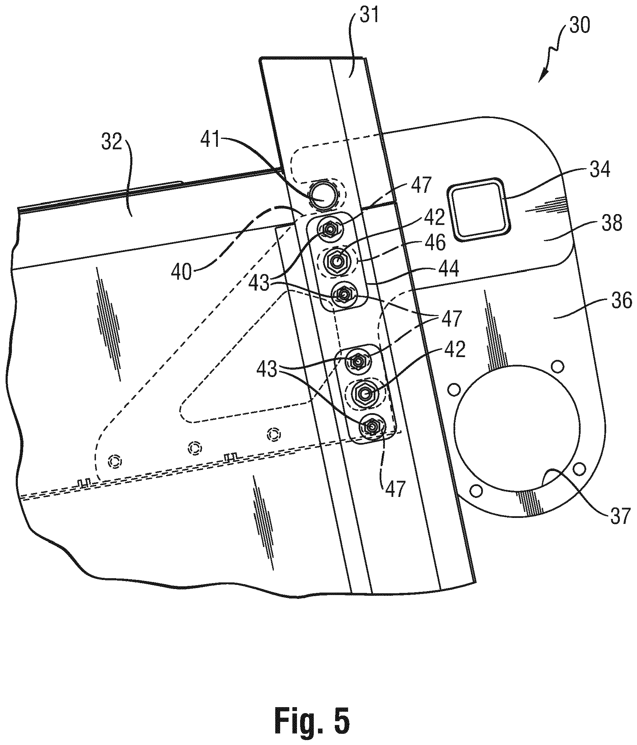

Die Montage des Abscheideaggregates 12 erfolgt derart, dass das Abscheideaggregat 12 wie eine Patrone in den Mähdrescher 1 respektive das Auswurfgehäuse 32 in deren Längsrichtung einführbar ist, wie in Fig. 3 angedeutet ist. Für die Montage des Abscheideaggregat 12 ist beidseitig an dem Rahmen 31 zumindest ein Aufnahmeelement 41 angeordnet, das jeweils mit zumindest einer, sich jeweils abschnittsweise in axialer Richtung des Abscheideaggregats12 erstreckenden, in Einführrichtung des Abscheideaggregates 12 hin offenen Ausnehmung 40 in den Seitenwänden 36, 38 in Eingriff bringbar ist, wie in Fig. 4 dargestellt. In dieser Montageposition tragen die Aufnahmeelemente 41 im Wesentlichen das Gewicht des Abscheideaggregates 12. Die Ausnehmungen 40 werden bei der Montage über die Aufnahmeelemente 41 geschoben, wobei das Abscheideaggregat 12 für dessen Montage in Längsrichtung gegenüber dem Rahmen 31 verschiebbar ist. Die Ausnehmungen 40 und die mit diesen korrespondierenden Aufnahmeelemente 41 bilden ein Loslager, um bei der Montage des Abscheideaggregates 12 einen Ausgleich von Fertigungstoleranzen insbesondere des Gehäuses 13 in Längsrichtung zu ermöglichen. Die anschließende Befestigung des Abscheideaggregates 12 gegenüber dem Rahmen 31 verfolgt durch ein Verschrauben mit diesem. Zum Verschrauben sind jeweils zwei Befestigungsbleche 44 auf jeder Seite des Abscheideaggregates 12 vorgesehen, die vorzugsweise jeweils drei Durchbohrungen aufweisen. Eine hiervon abweichende Anzahl an Durchbohrungen ist selbstverständlich denkbar. Durch eine Durchbohrung in der Mitte des jeweiligen Befestigungsbleches 44 wird ein Schraubbolzen 42 geführt, der mit dem jeweiligen Gewinde der Durchbohrungen 45 verschraubt wird. Um den Längstoleranzausgleich zu ermöglichen, weist der Rahmen 31 an den Stellen, durch den die Schraubbolzen 42 geführt werden, jeweils ein Langloch 46 auf, innerhalb derer die zur Fixierung des Abscheideaggregates 12 verwendeten Schraubbolzen 42 verschieblich sind, wie in Fig. 5 im Detail dargestellt ist. Zur Fixierung des Abscheideaggregates 12 wird dieser durch ein Paar Schrauben 43 an dem Rahmen 31 fixiert. Damit das für den Längstoleranzausgleich notwendige Spiel gegeben ist, weisen die Befestigungsbleche 44 an den jeweiligen Durchtrittstellen der Schraubenpaare 43 jeweils ein Langloch 47 auf.

Fig. 5 zeigt eine vergrößerte Detailansicht des Loslagers. Die Kontur des verborgenen Teils der Seitenwand 36 hinter dem Auswurfgehäuse 32 ist strichliniert angedeutet, um das Zusammenwirken der Ausnehmungen 40 und den mit diesen korrespondierenden Aufnahmeelemente 41 deutlicher zu zeigen. Weiterhin ist in dieser Darstellung das von dem Befestigungsblech 44 verdeckte Langloch 46 im Rahmen 31 ersichtlich, welches ebenfalls strichliniert dargestellt, die die Verschiebbarkeit der Schraubbolzen 42 respektive des Abscheideaggregates 12 relativ zum Rahmen 31 ermöglichen. Ebenfalls strichliniert angedeutet sind die in den Befestigungsblechen 44 vorgesehenen Langlöcher 47.

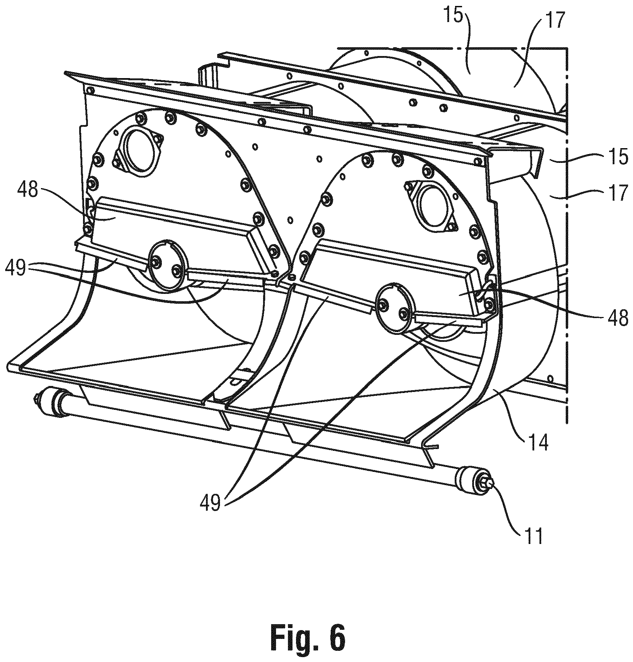

Die Darstellung in Fig. 6 zeigt den Einlaufbereich 14, in welchem das von der vorgelagerten Wendetrommel 10 an das Abscheideaggregat 12 abgegebene Erntegut 9 angenommen wird. Die Positionierung des Einlaufbereiches 14 gegenüber der Wendetrommel 10 ist von besonderer Bedeutung, um eine zuverlässige Gutübergabe durchführen zu können. Aus diesem Grund ist das Abscheideaggregat 12 in montierter Position durch das Festlager 11 am Trommelgehäuse 30 fixiert. Der Einlaufbereich 14 weist jeweils ein Lagerblech 48 auf, welches den oberen Einlaufbereich des jeweiligen Rotors oberhalb seiner Drehachse abdeckt. An den Unterkanten der Lagerbleche 48, die eine Einlaufkante darstellen, sind Verschleißbleche 49 angeordnet, die unter bestimmten Erntekonditionen, wie bei der Reis- oder der Sojaernte, dem als Verschleißschutz der Einlaufkanten dienen.

**Bezugszeichenliste**

| | | | |
|---|---|---|---|
| 1 | Mähdrescher | 29 | Korntank |
| 2 | Schneidwerk | 30 | Halteeinrichtung |
| 3 | Erntegut | 31 | Rahmen |
| 4 | Schrägförderkanal | 32 | Auswurfgehäuse |
| 5 | Steinfangmulde | 33 | Rückwand |
| 6 | Drescheinrichtung | 34 | Querverstrebung |
| 7 | Dreschtrommel | 35 | Befestigungselement |
| 8 | Dreschkorb | 36 | erste Seitenwand |
| 9 | Nutzmaterialstrom | 37 | Durchtrittsöffnung |
| 10 | Wendetrommel | 38 | zweite Seitenwand |
| 11 | Festlager | 39 | Aufnahmeelement |
| 12 | Abscheideaggregat | 40 | Ausnehmung |
| 13 | Gehäuse | 41 | Aufnahmeelemente |
| 14 | Einlaufbereich | 42 | Schraubbolzen |
| 15 | Abscheidebereich | 43 | Schraube |
| 16 | Auswurfbereich | 44 | Befestigungsblech |
| 17 | Abscheidemantel | 45 | Durchbohrung |
| 18 | Bodenbereich | 46 | Langloch |
| 19 | Abscheidekorb | 47 | Langloch |
| 20 | Rücklaufboden | 48 | Lagerblech |
| 21 | Nutzmaterialstrom | 49 | Verschleißblech |
| 22 | Vorbereitungsboden | 50 | Trommelhaus |
| 23 | Reinigungseinrichtung | | |
| 24 | Sieb | | |
| 25 | Sieb | | |
| 26 | Fallstufe | | |
| 27 | Gebläse | | |
| 28 | Förderschnecke | | |

## Patentansprüche

1. Mähdrescher (1), mit einem Trommelgehäuse (50), in dem eine Drescheinrichtung (6) sowie eine Wendetrommel (10) angeordnet sind, und einem Auswurfgehäuse (32), das an einem Rahmen (31) im Inneren des Mähdreschers (1) angeordnet ist, welche in ihrem Inneren ein der Wendetrommel (10) nachgeordnetes, nach dem Axialflussprinzip arbeitendes, vormontiertes Abscheideaggregat (12) aufnehmen, welches in einen Einlaufbereich (14), einen Abscheidebereich (15) und einen Auswurfbereich (16) unterteilt ist und zumindest einen Rotor und ein diesen zumindest abschnittsweise umgebendes Rotorgehäuse (13) umfasst,
**dadurch gekennzeichnet,**
**dass** das Abscheideaggregat (12) in seinem Einlaufbereich (14) durch eine Festlagerung (11) und in seinem Auswurfbereich (16) durch eine Loslagerung an dem Rahmen (31) vormontierbar ist.

2. Mähdrescher (1) nach Anspruch 1, **dadurch gekennzeichnet, dass** an der Innenseite des Rahmens (31) im Auswurfbereich (16) des Abscheideaggregates (12) zylindrische Aufnahmeelemente (41) einander gegenüberliegend angeordnet sind, an denen das Abscheideaggregat (12) aufhängbar ist.

3. Mähdrescher (1) nach einem der Ansprüche 1 oder 2, **dadurch gekennzeichnet, dass** das Abscheideaggregat (12) in seinem Auswurfbereich (16) eine Halteeinrichtung (30) aufweist, welche mit einer den Auswurfbereich (16) begrenzenden Rückwand (33) lösbar verbindbar ist

4. Mähdrescher (1) nach Anspruch 3, **dadurch gekennzeichnet, dass** die Halteeinrichtung (30) mit den Aufnahmeelementen (41) korrespondierende, sich abschnittsweise in axialer Richtung des Abscheideaggregates (12) erstreckende Ausnehmungen (40) aufweist.

5. Mähdrescher (1) nach einem der Ansprüche 1 bis 4, **dadurch gekennzeichnet, dass** das Abscheideaggregat (12) zumindest einen unterbrechungsfrei gestalteten, durchgehenden Abscheidemantel (17) aufweist.

6. Mähdrescher (1) nach einem der Ansprüche 3 bis 5, **dadurch gekennzeichnet, dass** die Halteeinrichtung (30) als eine Schweißbaugruppe ausgeführt ist, die eine Querverstrebung (34) umfasst, an der Aufnahmen für zumindest ein Getriebe und eine Antriebswelle, Positionierelemente zur Befestigung an der Rückwand (33) des Rotorgehäuses (13) sowie ein erstes Seitenelement (36) und ein zweites Seitenelement (38) angeordnet sind.

7. Mähdrescher (1) nach Anspruch 6, **dadurch gekennzeichnet, dass** beidseitig an dem Rahmen (31) mindestens eine Langlochkulisse (46) vorgesehen ist, in der mit der Halteeinrichtung (30) verbindbare Schraubbolzen (42) oder sonstige gleichwirkende Verbindungsmittel verschiebbar geführt angeordnet sind.

8. Mähdrescher (1) nach einem der Ansprüche 1 bis 7 **dadurch gekennzeichnet, dass** der Fixierung der Seitenelemente (36, 38) an dem Rahmen (31) dienende Befestigungsbleche (44) Langlöcher (47) aufweisen, wodurch die Befestigungsbleche (44) gegenüber Schrauben (43), die die Befestigungsbleche (44) mit dem Rahmen (31) ortsfest verbinden, relativ zu diesen verschiebbar geführt sind.

9. Mähdrescher (1) nach einem der Ansprüche 1 bis 8, **dadurch gekennzeichnet, dass** der Einlaufbereich (14) eine die Eingangsöffnung des Rotorgehäuses (13) bereichsweise abdeckende Stirnwand (48) aufweist, an der auf ihrer der Unterseite des Rotorgehäuses (13) zugewandten Seite zumindest eine Verschleißleiste (49) angeordnet ist.

10. Mähdrescher (1) nach Anspruch 9, **dadurch gekennzeichnet, dass** die Verschleißleiste (49) auswechselbar an der Stirnwand (48) angeordnet ist.

11. Mähdrescher (1) nach einem der Ansprüche 1 bis 11, **dadurch gekennzeichnet, dass** das Abscheidaggregat (12) in vormontiertem Zustand in den Mähdrescher (1) einschiebbar ist.

## Claims

1. A combine harvester (1) having a drum housing (50) in which a threshing device (6) and a turning drum (10) are arranged, and an ejection housing (32) which is arranged on a frame (31) in the interior of the combine harvester (1), which in their interior accommodate a preassembled separation assembly (12) which is arranged downstream of the turning drum (10) and which operates on the axial flow principle and which is subdivided into an intake region (14), a separation region (15) and an ejection region (16) and includes at least one rotor and a rotor housing (13) at least portion-wise surrounding same,
**characterised in that**
the separation assembly (12) can be pre-assembled to the frame (31) in its intake region (14) by a fixed mounting (11) and in its ejection region (16) by a floating mounting.

2. A combine harvester (1) according to claim 1 **characterised in that** arranged at the inside of the frame (31) in the ejection region (16) of the separation assembly (12) are cylindrical mounting elements (41) which are disposed in mutually opposite relationship and at which the separation assembly (12) can be suspended.

3. A combine harvester (1) according to one of claims 1 and 2 **characterised in that** in its ejection region (16) the separation assembly (12) has a holding device (30) which can be releasably connected to a rear wall (33) delimiting the ejection region (16).

4. A combine harvester (1) according to claim 3 **characterised in that** the holding device (30) has recesses (40) which correspond to the mounting elements (41) and which extend portion-wise in the axial direction of the separation assembly (12).

5. A combine harvester (1) according to one of claims 1 to 4 **characterised in that** the separation assembly (12) has at least one continuous separation casing portion (17) of an interruption-free configuration.

6. A combine harvester (1) according to one of claims 3 to 5 **characterised in that** the holding device (30) is in the form of a welded assembly which includes a transverse strut means (34) at which there are arranged mounting means for at least one transmission and a drive shaft, positioning elements for fixing to the rear wall (33) of the rotor housing (13) as well as a first side element (36) and a second side element (38).

7. A combine harvester (1) according to claim 6 **characterised in that** provided at both sides on the frame (31) is at least one sliding slot guide (46) in which screw bolts (42) which can be connected to the holding device (30) or other connecting means involving the same action are displaceably guidedly arranged.

8. A combine harvester (1) according to one of claims 1 to 7 **characterised in that** fixing plates (44) serving for fixing the side elements (36, 38) to the frame (31) have slots (47) whereby the fixing plates (44) are guided with respect to screws (43) which stationarily connect the fixing plates (44) to the frame (31) displaceably relative to same.

9. A combine harvester (1) according to one of claims 1 to 8 **characterised in that** the intake region (14) has an end wall (48) which portion-wise covers the entry opening of the rotor housing (13) and at which there is arranged at least one closure bar (49) on its side facing towards the underside of the rotor housing (13).

10. A combine harvester (1) according to claim 9 **characterised in that** the closure bar (49) is arranged replaceably on the side wall (48).

11. A combine harvester (1) according to one of claims 1 to 11 **characterised in that** the separation assembly (12) can be inserted in the pre-assembled state into the combine harvester (1).

## Revendications

1. Moissonneuse-batteuse (1), comprenant un carter de tambour (50), dans lequel sont disposés un dispositif de battage (6) et un tire-paille (10), et comprenant un carter d'éjection (32) qui est disposé sur un cadre (31) à l'intérieur de la moissonneuse-batteuse (1), lesquels contiennent dans leur volume intérieur un groupe de séparation (12) qui est prémonté, placé à la suite du tire-paille (10) et fonctionne selon le principe du flux axial et qui est subdivisé en une zone d'entrée (14), une zone de séparation (15) et une zone d'éjection (16) et comprend au moins un rotor et un carter de rotor (13) entourant celui-ci au moins en partie, **caractérisée en ce que** le groupe de séparation (12) peut être prémonté sur le cadre (31) par l'intermédiaire d'un palier fixe (11) dans sa zone d'entrée (14) et par l'intermédiaire d'un palier libre dans sa zone d'éjection (16).

2. Moissonneuse-batteuse (1) selon la revendication 1, **caractérisée en ce que** des éléments de réception cylindriques (41), auxquels le groupe de séparation (12) peut être suspendu, sont disposés l'un en face de l'autre sur le côté intérieur du cadre (31), dans la zone d'éjection (16) du groupe de séparation (12).

3. Moissonneuse-batteuse (1) selon l'une des revendications 1 ou 2, **caractérisée en ce que** le groupe de séparation (12) présente dans sa zone d'éjection (16) un dispositif de maintien (30) qui peut être relié de manière détachable à une paroi arrière (33) délimitant la zone d'éjection (16).

4. Moissonneuse-batteuse (1) selon la revendication 3, **caractérisée en ce que** le dispositif de maintien (30) présente des évidements (40) correspondant aux éléments de réception (41) et s'étendant en partie dans la direction axiale du groupe de séparation (12).

5. Moissonneuse-batteuse (1) selon l'une des revendications 1 à 4, **caractérisée en ce que** le groupe de séparation (12) présente au moins une enveloppe de séparation (17) continue, formée sans interruption.

6. Moissonneuse-batteuse (1) selon l'une des revendications 3 à 5, **caractérisée en ce que** le dispositif de maintien (30) est réalisé sous la forme d'un ensemble soudé qui comprend une entretoise transversale (34) sur laquelle sont disposés des logements pour au moins une boîte de vitesses et pour un arbre de transmission, des éléments de positionnement pour la fixation à la paroi arrière (33) du carter de rotor (13) ainsi qu'un premier élément latéral (36) et un deuxième élément latéral (38).

7. Moissonneuse-batteuse (1) selon la revendication 6, **caractérisée en ce qu'**au moins une coulisse à trous oblongs (46) est prévue des deux côtés sur le cadre (31), dans laquelle des boulons filetés (42) ou d'autres moyens de liaison équivalents pouvant être reliés au dispositif de maintien (30) sont disposés de façon à être guidés de façon coulissante.

8. Moissonneuse-batteuse (1) selon l'une des revendications 1 à 7 **caractérisée en ce que** des tôles de fixation (44) servant à la fixation des éléments latéraux (36, 38) au cadre (31) présentent des trous oblongs (47), au moyen desquels les tôles de fixation (44) sont guidées de façon coulissante par rapport à des vis (43) qui relient de manière fixe les tôles de fixation (44) au cadre (31).

9. Moissonneuse-batteuse (1) selon l'une des revendications 1 à 8, **caractérisée en ce que** la zone d'entrée (14) présente une paroi frontale (48) qui recouvre en partie l'ouverture d'entrée du carter de rotor (13) et sur laquelle, du côté tourné vers la face inférieure du carter de rotor (13), est disposée au moins une barre d'usure (49).

10. Moissonneuse-batteuse (1) selon la revendication 9, **caractérisée en ce que** la barre d'usure (49) est disposée sur la paroi frontale (48) de façon à pouvoir être remplacée.

11. Moissonneuse-batteuse (1) selon l'une des revendications 1 à 11, **caractérisée en ce que** le groupe de séparation (12) peut être introduit à l'état prémonté dans la moissonneuse-batteuse (1).
